## Europäisches Patentamt

## European Patent Office

## Office européen des brevets

(11) Publication number: **0 070 404 B1**

# EUROPEAN PATENT SPECIFICATION

(45) Date of publication of patent specification: **14.01.87**

(51) Int. Cl.⁴: **G 01 N 15/08**

(21) Application number: **82105532.4**

(22) Date of filing: **24.06.82**

(54) **A method and equipment to perform porosimetric analyses.**

(30) Priority: **09.07.81 IT 2282081**

(43) Date of publication of application:
**26.01.83 Bulletin 83/04**

(45) Publication of the grant of the patent:
**14.01.87 Bulletin 87/03**

(84) Designated Contracting States:
**AT BE CH DE FR GB LI NL SE**

(56) References cited:
**FR-A-1 356 275**
**US-A-2 874 565**
**US-A-3 882 714**

**MESSTECHNIK, vol. 76, no. 12, December 1968, pages 309-313, Baden, CH., W. FISCHER et al.: "Eine Methode zur Ermittlung der Porengrössenverteilung"**

(73) Proprietor: **CARLO ERBA STRUMENTAZIONE S.p.A.**
**I-20090 Rodano Milano (IT)**

(72) Inventor: **Sisti, Giorgio**
**P.za S. Agostino 7**
**Milan (IT)**
Inventor: **Riva, Ermete**
**Via Lunga 36**
**Merate Como (IT)**
Inventor: **Tosi, Bruno**
**Via Custoza 4**
**Carate Brianza Milan (IT)**
Inventor: **Italiano, Pietro**
**via Dante Alighieri 10**
**Cernusco Sul Naviglio Milan (IT)**

(74) Representative: **Marietti, Giuseppe**
**CENTRO DI CONSULENZA IN PROPRIETA' INDUSTRIALE Viale Caldara, 43**
**I-20122 Milano (IT)**

## Description

The present invention concerns a method and an equipment to perform porosimetric analyses on solid samples.

According to the known technique, said porosimetric analyses are performed by a process in which a solid sample is introduced into a test vessel called dilatometer, which is then filled with mercury and said mercury is then submitted to an increasing pressure through compressed air or oil. The mercury volumetric variations due to the penetration of same into the sample pores while pressure varies, are then detected and correlated with the pressure increasing values.

By this known process, it is possible to trace a pressure-volume mercury curve, on the basis of which, and according to a known formula, it is possible to obtain a size distribution of the sample pores, and then informations on the same sample.

During this test very high pressure values (around 2000 bar) are reached and it is clear that at the end of same it is necessary to lower pressure to values substantially equal to the ambient ones.

Examples of this known technique are given by US—A—3882714 and US—A—2874565.

During the abovestated pressure reduction obviously the mercury tends to come out of some of the pores in which it had penetrated during the pressure increasing step. In particular, it tends to come out of the pores which present an open configuration, while, on the contrary, it tends to remain inside the pores which present an almost closed configuration. Therefore, a lowering pressure-volume mercury curve is obtained which presents, together with the pressure-volume mercury curve traced during the pressure increase phase, an hysteretic course, allowing to obtain indications on the shape of the sample pores. However, these indications are relatively fragmentary and partial, in that they are obtained up to now in correspondence to a limited number of pressure values.

It has now been proved, after tests carried out by the Applicant, that much wider and much more reliable informations can be obtained if the decreasing pressure curve is performed following at each analysis a law predetermined in time, in particular at a constant speed, such as to allow a control on the pressure decrease speed.

Therefore, the present invention relates to a method to perform porosimetric analyses, of the type comprising the steps of: placing a solid sample into a dilatometer; filling the dilatometer with mercury up to a given level; submitting the mercury to an increasing pressure; detecting the mercury volumetric variations due to its penetration into the sample pores while pressure increases; and reducing said pressure from a maximum value substantially to the ambient value; characterized in that said pressure reduction is controllably carried out at a constant speed during each analysis, and in that the mercury volumetric variations due to mercury coming out from the sample pores are detected in relation to the decreasing pressure values.

The invention also concerns an apparatus for porosimetric detections, comprising a test apparatus with a dilatometer receiving in use, a porous sample and mercury and having a duct to a high-pressure circuit for pressurization of the mercury, means for detecting the mercury volumetric variations in said dilatometer, a pressure value detector for detecting pressure in said high-pressure circuit, pressure multiplier means acting on said high-pressure circuit, a low-pressure circuit acting on said pressure multiplier means and having a pumping unit for a low-pressure fluid, as well as a by-pass for the pumping unit, capable of releasing said low pressure through one or more exhaust control valves for the exhaust of said low-pressure fluid, characterized in that the apparatus comprises control means for said exhaust control valve(s) in said low-pressure circuit; a device to relate pressure reductions, as recorded by said pressure value detector, with time, said device controlling said exhaust control valve to maintain a preselectable constant pressure reduction speed; and means to detect the volumetric variations of mercury in relation to the decreasing pressure values.

The invention will be now more detailed described with reference to the accompanying drawings, wherein:

— Fig. 1 is a diagrammatical view showing a pressurization circuit for a porosimeter, including an apparatus for the control of pressure exhaust, according to the present invention.

— Fig. 2 is an example of a pressure-volume diagram which can be obtained in a complete porosimetric analysis when carried out by means of the apparatus of Fig. 1.

— Figs. 3 and 4 are axial cross-sections, angularly offset to each other, and showing a pressure reduction valve for the apparatus of Fig. 1.

— Fig. 5 is a partial cross-section of the same valve, corresponding to that of Fig. 4, but in another position of the valve stem.

## Description of the Preferred Embodiment

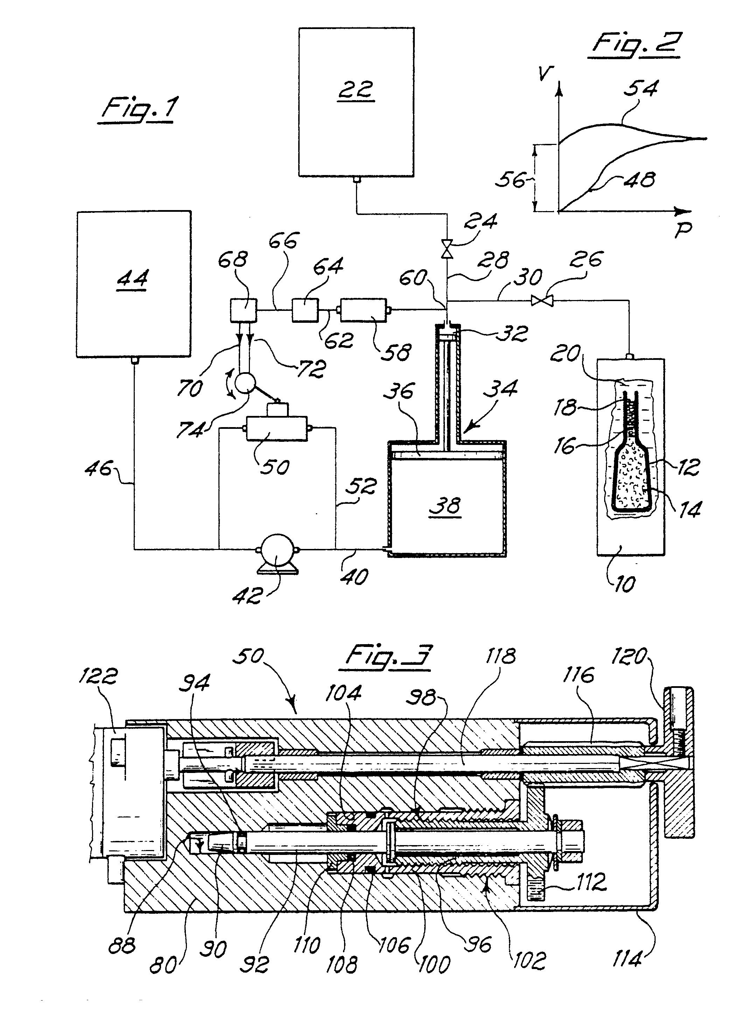

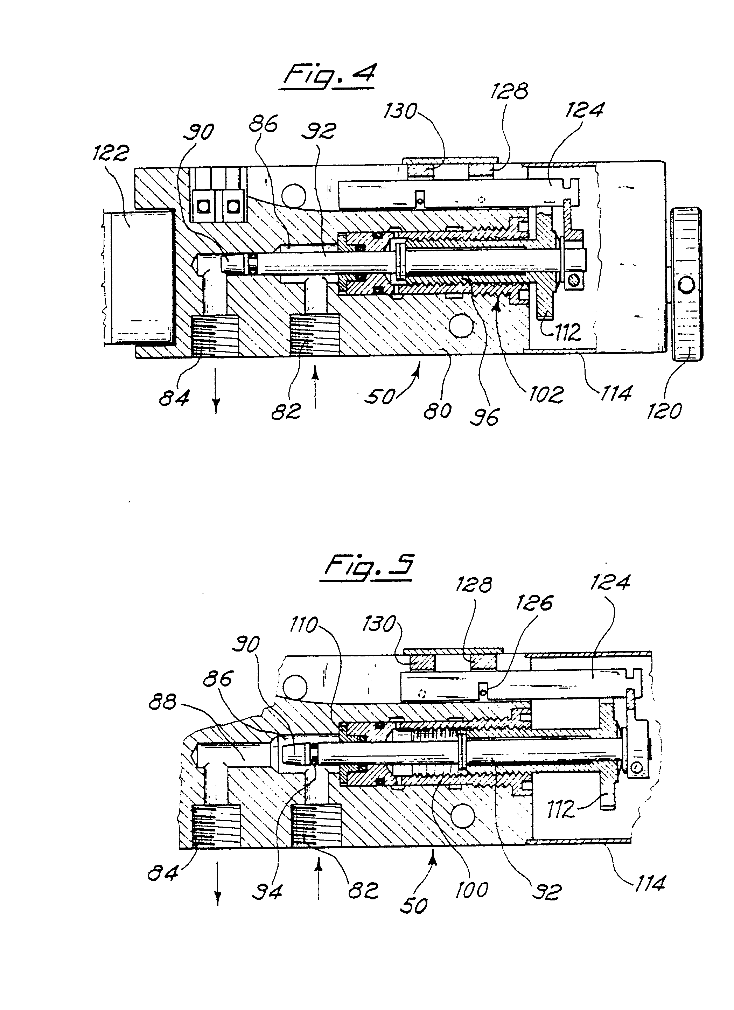

Referring to Fig. 1 an equipment for porosimetric detections comprises, as already known, a test apparatus 10, including a vessel or dilatometer 12 in which a solid sample 14 is placed, immersed in mercury 16, the meniscus 18 of which is in a zone of reduced diameter at the mouth of dilatometer 12. The dilatometer 12 is immersed in a different liquid, for instance an oil 20 which acts on the mercury meniscus 18 as well, said oil coming from a tank 22 through two valves 24 and 26 placed on two serially connected ducts 28 and 30. Duct 28 is connected, on the side opposite to tank 22, to the smaller cylinder 32 of a pressure multiplier 34, of a known type, the greatest piston 36 of which is placed in a cylinder 38, which is fed through a duct 40 by a pump 42 sucking oil or another suitable fluid from a tank 44 through a tube 46. By pumping the low-pressure fluid from pump 42 to cylinder 38, said piston 36 is moved and a pressure increase in the circuit downstream cylinder 32 is obtained, with a pressure increase of oil 20 in the test apparatus 10. Said pressure increase compels the mercury 16 to penetrate into the pores of sample 14, with a related variation, in particular a decrease in the level of meniscus 18, which is detected time by time in relation to the pressure values, to trace a curve 48 (Fig. 2), from which it is possible to obtain, in a known way, sufficient data to determine some important porosimetric properties of sample 14. To obtain analytical results, it is known that pressure exercised in the high-pressure circuit must reach very high values, about 2000 bar, while the low-pressure circuit operates taking into account that said multiplier 34 gives pressure ratios of the order of 1/100, i.e. within limits around 20 bar.

Said pressure reduction in the high-pressure circuit, from said maximum value of about 2000 bar to the ambient value, is performed by means of a valve 50 acting on the low-pressure circuit, in particular in a by-pass duct 52 which is connected to the tube sections 40 and 46, respectively downstream and upstream said pump 42.

It has now been noticed that said pressure reduction involves significant importance for porosimetric analyses and particularly for the determination of the pore shape and related distribution, when said pressure reduction is performed according to a constant speed. A curve of the type as shown by 54 in Fig. 2 is then obtained, said curve, together with curve 48, determining a general shape of hysteretic type. The value 56 obviously corresponds to the amount of mercury 16 definitely remaining in the pores of sample 14. To perform said pressure reduction with a constant speed of a predetermined value, the invention proposes a pressure transducer 58 which detects at 60 the pressure in said high pressure circuit and transforms the obtained pressure values into signals which are transmitted along a line 62 to an apparatus to carry out a derivation with respect to time, known in itself, as shown by 64 in Fig. 1. The output signal from apparatus 64 is transmitted at 66 to a window chopper 68 which compares said signal with two fixed signals respectively, corresponding to the allowed maximum and minimum pressure reduction speed. These two signals of chopper 68 can be modified in a known way, either by widening or reducing the fork between them, or mainly modifying their value in order to correspondingly modify the preset speed values of pressure reduction. When said chopper 68 ascertains that the signal coming from line 66 exceeds predetermined maximum or minimum limits, either one of the other of two signals, schematically indicated by 70 and 72, is emitted to cause the actuation in a direction or in the other one of motor means 74 acting on said valve 50.

Said valve 50, which will be now more detailedly described with reference to Figures 3 to 5, is a needle type valve with a cone-shaped stem and a cylindrical seat, the stem cone angle being chosen so as to obtain a good balance between the need of a quick actuation and that of a valve precision. It is obvious that, if the cone angle is small, the actuation speed will be lower, but a higher precision will be achieved.

The illustrated valve essentially comprises a body 80 in which an input passage 82 and an exhaust passage 84 are forseen for the fluid of the low-pressure circuit, said passages being connected to a duct 86 where a cylindrical seat 88 is provided. A cone-shaped body 90 of the valve acts in said seat and is mounted at the end of a stem 92 capable of axially moving with respect to the cylindrical seat 88. Figures 3, 4 and Fig. 5 respectively show the valve stem 92 in its end positions: completely closed valve in Figs. 3 and 4 and completely open valve in Fig. 5. However, in general, the valve is designed to operate in a position in which the cone-shaped section 90 of same only partially penetrates into the cylindrical seat 88 so as to leave a little fluid blow-by area, corresponding to the desired pressure reduction speed in the low-pressure circuit and consequently in the high pressure circuit.

The stem 92 is mounted in a rotationally free, but axially integral way inside a bushing 96, which is threaded on the outside in 98 to meet a corresponding threading of a nut screw provided in an insert 100, on its turn fixed to the valve body 80 by threading in 102. Insert 100 is housed in a seat 104 of the valve body with pneumatic sealing in 106 and its bottom is crossed by the stem 92, the sealing being obtained by a gasket 108 blocked by a bush 110. Said bushing 96 is integral, for instance in a single piece, with a gear wheel 112 placed in a zone outside the valve body, but protected towards outside by a covering 114. The gear wheel 112 meshes with a pinion 116 mounted on a shaft 118 placed parallely to the stem 92. As clearly shown in the drawings, the pinion 116 has such an axial length as to allow the gear wheel 112 to slide in the same direction along the same, as the bushing 96 goes up and down when the latter is turned, owing to its meshing with the threading 98. The shaft 118 can be rotated manually, by means of a control handle 120, acting in emergency, but it is usually controlled in its rotations by a geared motor 122 of a type known in itself, corresponding to the motor means 74 of Fig. 1. Obviously, said geared motor can rotate in both directions to cause rotations in both directions of pinion 116 and wheel 112, as well as of bushing 96, with corresponding upward and downward axial movements of same and, together with it, of stem 92, which opens or closes the valve seat 88. The axial movements of stem 92 control the passage area of the low-pressure fluid between inlet 82 and outlet 84. The movements of stem 92 are controlled, as previously seen, by a detection performed on the high-pressure circuit, so as to maintain the pressure reduction speed within given limits. In this way it is possible to obtain a pressure reduction speed in the high-pressure circuit which ranges from values of 1 bar/s to 20 bar/s, with a single type of valve design, that is with the same exhaust valve and therefore with the same analytical equipment.

With reference to Figs. 4 and 5, the stem 92 is provided, outside the valve body 80, with a plate 124 which moves parallely to the stem itself out of the valve body 80 and bears means for delimiting the run of stem 92, between a completely closed valve position and a completely open valve position. Said means can be formed by an opening 126, which cooperates with two detectors 128 and 130, for instance photodiodes, to determine the postions of maximum closure (Fig. 4) and maximum opening (Fig. 5). Said valve has proved to be particularly precise and of particularly quick actuation, so that it is possible to consider that a pressure reduction in the high-pressure circuit is performed, by said control, at a constant speed, in a way that the curve 54 of Fig. 2 can be traced and related conclusions can be drawn from it about further porosimetric properties of sample 14, non detectable from curve 48 alone.

As it will be clear to those skilled in the art, the invention can be carried out in different ways, all coming within the scope of the present invention.

## Claims

1. A method to perform porosimetric analyses, of the type comprising the steps of: placing a solid sample (14) into a dilatometer (12); filling the dilatometer (12) with mercury (16) up to a given level (18); submitting the mercury (16) to an increasing pressure; detecting the mercury volumetric variations due to its penetration into the sample pores while pressure increases; and reducing said pressure from a maximum value substantially to the ambient value; characterized in that said pressure reduction is controllably carried out at a constant speed during each analysis, and in that the mercury volumetric variations due to mercury coming out from the sample pores, are detected in relation to the decreasing pressure values.

2. A method according to claim 1, characterized in that the decreasing pressure values are recorded, a time derivative of same is obtained, and a pressure exhaust device (50) is controlled in function of the instant value of said derivative.

3. An apparatus for porosimetric detections, comprising a test apparatus with a dilatometer (12) receiving, in use, a porous sample (14) and mercury (16) and having a duct (30) to a high-pressure circuit (20, 22, 24, 26, 28, 30) for pressurization of the mercury, means for detecting the mercury volumetric variations in said dilatometer (12), a pressure value detector (58, 60) for detecting pressure in said high-pressure circuit (20, 22, 24, 26, 28, 30), pressure multiplier means (32, 34, 36, 38) acting on said high-pressure circuit, a low-pressure circuit (40, 42, 44, 46, 48, 50) acting on said pressure multiplier means (32, 34, 36, 38) and having a pumping unit (42) for a low-pressure fluid, as well as a by-pass (52) for the pumping unit (42), capable of releasing said low pressure through one or more exhaust control valves (50) for the exhaust of said low-pressure fluid, characterized in that the apparatus comprises control means (68, 70, 72, 74) for said exhaust control valve(s) (50) in said low-pressure circuit (40, 42, 44, 46, 48, 50); a device (64) to relate pressure reductions, as recorded by said pressure value detector (58, 60), with time, said device (64) controlling said exhaust control valve (50) to maintain a pre-selectable constant pressure reduction speed; and means to detect the volumetric variations of mercury (16) in relation to the decreasing pressure values.

4. An apparatus according to claim 3, wherein said device (64) to relate the pressure decreasing values with time is a differentiator device and wherein said valve control means (68, 70, 72, 74) includes a window chopper (68) acting on a mechanical control device (74) of the valve when the value from said derivation device (64) exceeds a given value range which can be predetermined in width and/or value.

5. An apparatus according to claim 4, wherein said mechanical control device (70) includes a motor means (120, 122) to move a needle valve stem (92), said valve having a cone-shaped shutter (90) and a cylindrical seat (88).

6. An apparatus according to claim 5, wherein said motor means (120, 122) includes a driving shaft (118) rotating in both directions and capable of actuating a kinematic chain (116, 112, 96, 98, 100) controlling the axial movements of said needle valve stem (92).

7. An apparatus according to claim 6, wherein said kinematic chain comprises a screw nut coupling (96, 98, 100) to transform the rotatory movements of said driving shaft (118) into axial movements of said valve stem (92).

8. An apparatus according to claim 7, wherein said screw-nut coupling comprises a threaded bushing (96) housing said valve stem (92) and capable of rotating and axially moving under the control of said driving shaft (118).

9. An apparatus according to claim 8, wherein said threaded bushing (96) is rotated in both directions by said driving shaft (118) due to the coupling of an axially elongated pinion (116), integral to said driving shaft, and of a gear wheel (112) integral to said bushing (96) and meshing with said pinion, said wheel being able to axially move with respect to said pinion.

10. An apparatus according to claim 8, wherein said valve stem (92) is housed, in an axially locked but rotationally free way, inside said bushing (96), the stem being blocked against rotations.

11. An apparatus according to claim 5, wherein said valve stem (92) carries, outside the valve body, means integral to the same and capable of acting on run stops.

## Revendications

1. Procédé pour effectuer des analyses porosimétriques, du type comprenant les opérations de: mise en place d'un échantillon solide (14) dans un dilatomètre (12), remplissage du dilatomètre (12) avec du mercure (16) jusqu'à un niveau donné (18); soumission du mercure (16) à une pression croissante; détection des variations volumétriques du mercure dues à sa pénétration dans les pores de l'échantillon lorsque la pression augmente; et réduction de la dite pression, d'une valeur maximale sensiblement à la valeur ambiante; caractérisé en ce que ladite réduction de pression est effectuée de façon réglable à une vitesse constante pendant chaque analyse, et en ce que les variations volumétriques du mercure, dues à la sortie du mercure des pores de l'échantillon, sont détectées en relation aux valeurs décroissantes de la pression.

2. Procédé suivant la revendication 1, caractérisé en ce que les valeurs de pression décroissantes sont enregistrées, une dérivée de ces valeurs en fonction du temps est obtenue, et un dispositif (50) de décharge de pression est commandé en fonction de la valeur instantanée de ladite dérivée.

3. Dispositif pour des détections porosimétriques, comprenant un appareil d'essai avec un dilatomètre (12) recevant, en utilisation, un échantillon poreux (14) et du mercure (16) et comportant un conduit (30) relié à un circuit à haute pression (20, 22, 24, 26, 28, 30) pour la mise sous pression du mercure, des moyens pour détecter les variations volumétriques du mercure dans ledit dilatomètre (12), un détecteur (58, 60) de valeur de pression pour détecter la pression dans ledit circuit à haute pression (20, 22, 24, 26, 28, 30), des moyens de multiplication de pression (32, 34, 36, 38) agissant sur lesdits circuits à haute pression, un circuit à basse pression (40, 42, 44, 46, 48, 50) agissant sur lesdits moyens de multiplication de pression (32, 34, 36, 38) et comportant un groupe de pompage (42) pour un fluide à basse pression, ainsi qu'un conduit de contournement (52) pour le groupe de pompage (42), capable de purger ladite basse pression à travers une ou plusieurs soupapes (50) de réglage de décharge pour la décharge dudit fluide à basse pression, caractérisé en ce que le dispositif comprend des moyens de commande (68, 70, 72, 74) de la ou des dites soupapes de réglage de décharge (50) dans ledit circuit à basse pression (40, 42, 44, 46, 48, 50); un dispositif (64) pour déterminer la relation des réductions de pression, enregistrées par ledit détecteur de valeur de pression (58, 60), en fonction du temps, ce dispositif (64) commandant la soupape de réglage de décharge (50) de manière à maintenir une vitesse constante prédéterminable de réduction de pression; et des moyens pour détecter les variations volumétriques du mercure (16) en relation aux valeurs de pression décroissantes.

4. Dispositif suivant la revendication 3, dans lequel le dispositif (64) pour déterminer la relation des valeurs de pression décroissantes en fonction du temps est un dispositif de différentiation et dans lequel lesdits moyens de commande de soupape (68, 70, 72, 74) comprennent un dispositif de coupure à fenêtre (68) agissant sur un dispositif (74) de commande mécanique de la soupape lorsque la valeur fournie par le dispositif de différentiation (64) dépasse une plage de valeur donnée qui peut être prédéterminée en largeur et/ou valeur.

5. Dispositif suivant la revendiation 4, dans lequel le dispositif de commande mécanique (70) comprend un moteur (120, 122) pour déplacer une tige (92) de soupape à aiguille, ladite soupape comportant un obturateur conique (90) et un siège cylindrique (88).

6. Dispositif suivant la revendication 5, dans lequel le moteur (120, 122) comprend un arbre d'entraînement (118) qui tourne dans les deux sens et peut actionner une chaîne cinématique (116, 112, 96, 98, 100) commandant les mouvements axiaux de la dite tige (92) de soupape à aiguille.

7. Dispositif suivant la revendication 6, dans lequel ladite chaîne cinématique comprend une transmission à vis et écrou (96, 98, 100) pour transformer les mouvements de rotation dudit arbre d'entraînement (118) en mouvements axiaux de ladite tige de soupape (92).

8. Dispositif suivant la revendication 7, dans lequel ladite transmission à vis et écrou comprend un manchon fileté (96) contenant ladite tige de soupape (92) et capable de tourner et de se déplacer axialement sous la commande dudit arbre d'entraînement (118).

9. Dispositif suivant la revendication 8, dans lequel ledit manchon fileté (96) est entraîné en rotation dans les deux sens par l'arbre d'entraînement (118) au moyen de l'accouplement d'un pignon axialement allongé (116), solidaire de l'arbre d'entraînement, et d'une roue dentée (112) solidaire du manchon (96) et en prise avec ledit pignon, ladite roue pouvant se déplacer axialement par rapport audit pignon.

10. Dispositif suivant la revendication 8, dans lequel la tige de soupape (92) est logée, d'une manière axialement bloquée mais libre en rotation, à l'intérieur du manchon (96), la tige étant bloquée contre les rotations.

11. Dispositif suivant la revendication 5, dans lequel la tige de soupape (92) porte, à l'extérieur du corps de soupape, des moyens solidaires de la tige et capables d'agir sur des butées de limitation de course.

**Patentansprüche**

1. Verfahren zur Porenanalyse, welches folgende Schritte umfaßt: Anordnung einer Festkörperprobe (14) in einem Dilatometer (12); Befüllen des Dilatometers (12) mit Quecksilber (16) bis zu einem vorgegebenen Niveau (18); Beaufschlagung des Quecksilbers (16) mit einem zunehmenden Druck; Messen der volumetrischen Änderungen des Quecksilbers aufgrund seines Eindringens in die Probenporen während der Druckzunahme; Reduzieren des Drucks von einem Maximalwert auf einen im wesentlichen Umgebungswert, dadurch gekennzeichnet, daß die Druckreduktion bei konstanter Geschwindigkeit während jeder Analyse steuerbar durchgeführt ist, und daß die volumetrischen Änderungen des Quecksilbers aufgrund des aus den Probenporen austretenden Quecksilbers in Verhältnis zum abnehmenden Druck gemessen werden.

2. Verfahren nach Anspruch 1, dadurch gekennzeichnet, daß die abnehmenden Druckwerte aufgezeichnet werden, eine zeitliche Ableitung von diesen erhalten wird, und ein Druckentlüfter (50) in Funktion des augenblicklichen Wertes der Ableitung gesteuert ist.

3. Vorrichtung zur Porenanalyse, welche eine Testvorrichtung mit einem Dilatometer (12) zur Aufnahme einer porösen Probe (14) und Quecksilber (16) umfaßt, mit einer Leitung (30) zu einem Hochdruckkreislauf (20, 22, 24, 26, 28, 30) zur Druckbeaufschlagung des Quecksilbers mit Einrichtungen zum Messen der volumetrischen Änderungen des Quecksilbers im Dilatometer (12), einem Druckwertdetektor (58, 60) zum Messen des im Hochdruckkreislauf (20, 22, 24, 26, 28, 30) auftretenden Druckes, Druckverstärker (32, 34, 36, 38), welche auf den Hochdruckkreislauf einwirken; einem Niederdruckkreislauf (40, 42, 44, 46, 48, 50), welcher auf die Druckverstärker (32, 34, 36, 38) einwirkt, sowie einer Pumpenheit (42) für ein Niederdruckfluid, als auch einem Bypass (52) für die Pumpeinheit (42), welcher geeignet ist, den Niederdruck durch ein oder mehrere Auslaßkontrollventile(e) (50) zum Auslassen des Niederdruckfluids freizugeben, dadurch gekennzeichnet, daß die Vorrichtung mehrere Kontrolleinrichtungen (68, 70, 72, 74) für das (die) Auslaßkontrollventil(e) (50) im Niederdruckkreislauf (40, 42, 44, 46, 48, 50), eine Einrichtung (64) welche die vom Druckwertdetektor (58, 60) aufgezeichneten Druckreduktionen mit der Zeit in Beziehung setzt umfaßt, wobei die Einrichtung (64) das Auslaßkontrollventil (50) steuert, um eine vorwählbare, konstante Druckreduktionsgeschwindigkeit zu erhalten; und Einrichtungen zum Messen der volumetrischen Änderungen des Quecksilbers (16) in bezug auf die abnehmenden Druckwerte umfaßt.

4. Vorrichtung nach Anspruch 3, bei welcher die Einrichtung (64), mittels welcher die Druckabnahmewerte mit der Zeit in Beziehung gebracht werden, eine Differentiationseinrichtung ist, und die Ventilkontrolleinrichtungen (68, 70, 72, 74) einen Schlitzchopper (68) aufweist, welcher auf eine mechanische Kontrolleinrichtung (74) des Ventils einwirkt, wenn der von der Differentiationseinrichtung (64) kommende Wert einen vorgegebenen Wertbereich überschreitet, dessen Breite und/oder Größe vorbestimmbar ist.

5. Vorrichtung nach Anspruch 4, bei welcher die mechanische Kontrolleinrichtung (70) eine Antriebseinrichtung (120, 122) zum Bewegen einer Nadelventilspindel (92) umfaßt, wobei das Ventil einen konusförmigen Verschluß (90) und eine zylindrische Paßfläche (88) aufweist.

6. Vorrichtung nach Anspruch 5, bei welcher die Antriebseinrichtung (120, 122) eine in beide Richtungen drehende Antriebswelle (118) umfaßt, welche zum Ingangsetzen einer kinematischen Kette (116, 112, 96, 98, 100) geeignet ist, die die Axialbewegungen der Nadelventilspindel (92) steuert.

7. Vorrichtung nach Anspruch 6, bei welcher die kinematische Kette eine Schraubenmutterkupplung (96, 98, 100) zum Überführen der Rotationsbewegungen der Antriebswelle (118) in Axialbewegungen der Ventilspindel (92) umfaßt.

8. Vorrichtung nach Anspruch 7, bei welcher die Schraubenmutterkupplung eine die Ventilspindel (92) umschließende Gewindehülse (96) umfaßt, welche geeignet ist, Dreh- sowie Axialbewegung durch Steuerung der Antriebswelle (118) durchzuführen.

9. Vorrichtung nach Anspruch 8, bei welcher die Gewindehülse (96) von der Antriebswelle (118) in beiden Richtungen mittels eines sich axial erstreckenden, in die Antriebswelle integrierten Ritzels (116) und eines an die Hülse (96) angeschlossenen Getrieberades (112), welches mit dem Ritzel in Eingriff steht angetrieben ist, wobei das Rad bezogen auf das Ritzel axial bewegbar ist.

10. Vorrichtung nach Anspruch 8, bei welcher die Ventilspindel (92) in der Gewindehülse (96) axial verriegelt, jedoch frei drehbar umschlossen angeordnet ist, wobei die Spindel gegen Drehung gesperrt ist.

11. Vorrichtung nach Anspruch 5, bei welcher die Ventilspindel (92) Einrichtungen außerhalb des Ventilkörpers trägt, welche in diesen integriert und geeignet sind, Umlaufstops zu bewirken.

0 070 404

*Fig.1*

*Fig.2*

*Fig.3*

*Fig.4*

*Fig.5*